# EUROPÄISCHE PATENTSCHRIFT

(11) **EP 2 886 285 B1**
(45) Veröffentlichungstag und Bekanntmachung des Hinweises auf die Patenterteilung: **09.01.2019**
(21) Anmeldenummer: 14004149.2
(22) Anmeldetag: 09.12.2014
(51) Int. Cl.: B29C 44/12, B29C 44/34, B29C 65/36, F16L 59/20, F16L 13/02, F16L 47/02, B29L 9/00, B29L 23/00

(54) **VERFAHREN UND VORRICHTUNG ZUM VERBINDEN VON KUNSTSTOFFMANTELROHREN**
METHOD AND DEVICE FOR CONNECTING PLASTIC JACKET PIPES
PROCÉDÉ ET DISPOSITIF POUR CONNECTER DES TUBES GAINÉS DE MATIÈRE PLASTIQUE

(30) Priorität: 19.12.2013 DE 102013021667
(43) Veröffentlichungstag der Anmeldung: 24.06.2015
(73) Patentinhaber: isoplus Fernwärmetechnik GmbH, 99706 Sondershausen (DE)
(72) Erfinder: Hagedorn, Jens, 99706 Sondershausen (DE); Wersenger, Oliver, 99707 Kyffhäuserland (DE); Otto, Matthias, 99706 Sondershausen (DE)
(74) Vertreter: Hauck Patentanwaltspartnerschaft mbB

(56) Entgegenhaltungen:
- EP-A1- 2 452 805
- EP-A2- 1 100 290
- WO-A1-2011/143773
- US-B1- 6 278 096

## Beschreibung

Die vorliegende Erfindung betrifft ein Verfahren zum Verbinden von Kunststoffmantelrohren, die ein metallisches Mediumrohr, eine dieses umgebende Schaumisolierung und ein Außenrohr aus thermoplastischem Kunststoff aufweisen, mit den folgenden Schritten:
Verschweißen der aneinanderstoßenden Mediumrohre;
Anordnen einer Muffe aus thermoplastischem Kunststoff über einem über der Verbindungsstelle zwischen den Mediumrohren gebildetem Hohlraum;
Anordnen eines Metalleinsatzes im Verbindungsbereich zwischen Außenrohr und Muffe und induktives Verschweißen der Muffe mit dem Außenrohr mit Hilfe eines um die Muffe gelegten Schweißbandes;
Ausschäumen des zwischen Muffe und Mediumrohr vorhandenen Hohlraumes.

Ein derartiges Verfahren ist bekannt.

Zum Verbinden der Kunststoffmantelrohre werden diese normalerweise vorbereitet, indem im Bereich der Verbindungsstelle die Schaumisolierung und ein Teil des darüber befindlichen Außenrohres entfernt werden. Die beiden zu verbindenden Rohre werden dann aneinandergesetzt, und die Mediumrohre, die üblicherweise aus Stahl bestehen, werden aneinandergeschweißt. Der über der Verbindungsstelle befindliche Hohlraum wird dann mit Hilfe einer Muffe aus thermoplastischem Kunststoff, üblicherweise Polyethylen, die vorher auf eines der Rohre aufgeschoben worden ist, geschlossen, und die Muffe wird induktiv mit dem Außenrohr verschweißt, nachdem vorher zwischen Muffe und Außenrohr ein Metalleinsatz gelegt worden ist.

Bei einem derartigen Metalleinsatz kann es sich beispielsweise um ein Lochblech, Streckgitter etc. handeln. Die Wärme der in diesem Metalleinsatz induzierten Wirbelströme führt dabei zu einem Aufschmelzen von Muffe und Außenrohr im Verbindungsbereich, wobei die Schmelze den Metalleinsatz durchdringt und nach dem Erstarren eine zugfeste, dichte Verbindung zwischen Außenrohr und Muffe sicherstellt. Die Muffe wird in ihren beiden Randbereichen mit den beiden Außenrohren der zu verbindenden Kunststoffmantelrohre induktiv verschweißt.

Nach dem Verschweißen wird der zwischen Muffe und Mediumrohr vorhandene Hohlraum über eine oder mehrere Öffnungen in der Muffe ausgeschäumt. Hierbei findet in der Regel ein geeigneter PU-Schaum Verwendung. Nach dem Ausschäumen werden die zum Ausschäumen verwendeten Öffnungen geschlossen. Die Rohrverbindung ist dann fertiggestellt.

Ein derartiges Verfahren ist beispielsweise aus der WO 2011/143773 A1 bekannt. In diesem bekannten Verfahren finden zwei Schweißbänder Verwendung, mit denen die Randbereiche einer Muffe mit den Außenrohren der zu verbindenden Rohre verschweißt werden.

Die hier beschriebenen Kunststoffmantelrohre finden beispielsweise als Fernwärmerohre Verwendung. Die einzelnen Rohrschüsse werden dabei verlegt und über das vorstehend beschriebene Verbindungsverfahren miteinander verbunden. Insbesondere, wenn diese Verlegearbeiten im Winter durchgeführt werden, können niedrige Temperaturen auftreten, die bewirken, dass die miteinander verschweißten Mediumrohre niedrige Temperaturen besitzen, die beispielsweise unter 5°C liegen. Es wurde nunmehr festgestellt, dass sich solche niedrigen Temperaturen der verschweißten Mediumrohre nachteilig auf die Qualität der an der Verbindungsstelle hergestellten Schaumisolierung auswirken. Dies ist insbesondere dann der Fall, wenn die Temperatur der Mediumrohre unter dem Taupunkt liegt, da dann ein Auskondensieren der vorhandenen bzw. beim Ausschäumen auftretenden Feuchtigkeit auftritt, wodurch die Qualität der hergestellten Schaumisolierung beeinträchtigt wird.

Ferner ist aus der US 6 278 096 B1 ein Verfahren zum Reparieren von verlegten isolierten Rohren bekannt, bei dem mithilfe einer Induktionsschweißvorrichtung eine beschädigte Rohrisolierung repariert wird. Hierbei kommt eine Induktionsheizspulenklemme zum Einsatz, die um ein verlegtes Rohr herum anordbar ist, um die Rohrisolierung induktiv zu erwärmen.

Aus der EP 1 100 290 A2 sind ein Verfahren und eine Vorrichtung zur Vorwärmung eines Rohrstrangs im Bereich von Rundschweißnähten bekannt, wobei ein Induktor um den Rohrstrang gelegt wird. Hier sollen unterschiedliche Wärmeenergiemengen über die Länge des Rohrstrangs eingebracht werden. Über den Aufbau des Induktors ist in dieser Veröffentlichung nichts ausgesagt.

Der vorliegenden Erfindung liegt die Aufgabe zugrunde, ein Verfahren der eingangs beschriebenen Art zu schaffen, mit dem Rohrverbindungen besonders hoher Qualität hergestellt werden können.

Diese Aufgabe wird erfindungsgemäß bei einem Verfahren der angegebenen Art durch die kennzeichnenden Merkmale von Patentanspruch 1 gelöst.
Bei dem erfindungsgemäßen Verfahren wird somit die Muffe induktiv mit dem Außenrohr verschweißt und werden die miteinander verschweißten Mediumrohre im Verbindungsbereich induktiv erwärmt. Dies wird dadurch bewerkstelligt, dass dasselbe Schweißband, mit dem die Muffe induktiv mit dem Außenrohr verschweißt wird, oder mindestens ein weiteres Schweißband in dem Bereich um die Muffe gelegt wird, in dem kein Metalleinsatz zwischen Muffe und Außenrohr gelegt worden ist, und indem dieses Schweißband mit einer entsprechenden Spannung beaufschlagt wird. Da sich im Bereich dieses Schweißbandes kein Metalleinsatz befindet, werden entsprechende Wirbelströme in den Mediumrohren induziert, die zur erwünschten Erwärmung der miteinander verbundenen Mediumrohre führen. Nach der durchgeführten induktiven Erwärmung oder noch während der Erwärmung wird dann der Hohlraum ausgeschäumt, so dass der gebildete Schaum die erwärmten Mediumrohre kontaktiert, somit kein unerwünschtes Kondensieren von Feuchtigkeit auftritt. Es wird daher eine gute Schaumqualität erzielt.

Das induktive Verschweißen der Muffe wird mit mindestens einem flexiblen Schweißband geführt, das die entsprechenden elektrischen Leiter trägt. Wenn nur ein Schweißband vorgesehen ist, werden die beiden Randbereiche der Muffe nacheinander mit dem einen Schweißband verschweißt. Normalerweise kommen jedoch zwei Schweißbänder zur Anwendung, so dass beide Randbereiche mit den beiden Schweißbändern gleichzeitig verschweißt werden. Für das erfindungsgemäße Verfahren, bei dem zusätzlich zum induktiven Verschweißen die beiden miteinander verbundenen Mediumrohre induktv erwärmt werden, kann bei der einfachsten Ausführungsform dasselbe Schweißband, das zum induktiven Verschweißen benutzt wird, danach zum induktiven Erwärmen verwendet werden. Normalerweise findet jedoch mindestens ein weiteres Schweißband Verwendung, das zum induktiven Erwärmen eingesetzt wird. Bei einer besonders bevorzugten Ausführungsform finden zwei Schweißbänder Verwendung, mit denen die Randbereiche der Muffe induktiv verschweißt werden, und mindestens ein weiteres Schweißband, das zwischen den beiden Randbereichen zum induktiven Erwärmen um die Muffe gelegt wird.

Generell kann hierbei das induktive Erwärmen gleichzeitig mit oder nach dem induktiven Verschweißen der Muffe geführt werden.

Das zum induktiven Erwärmen verwendete Schweißband wird vorzugsweise im mittleren Bereich der Muffe um diese gelegt, um eine gleichmäßige Erwärmung der Mediumrohre im Verbindungsbereich zu erzielen. Hierdurch soll insbesondere der Bereich der Mediumrohre, über dem sich der auszuschäumende Hohlraum befindet, möglichst gleichmäßig erwärmt werden.

Das zum induktiven Erwärmen der Mediumrohre verwendete Schweißband oder die hierzu verwendeten Schweißbänder können identisch ausgebildet sein wie die zum induktiven Verschweißen der Muffe verwendeten Schweißbänder. Es können jedoch aber auch unterschiedlich ausgebildete Schweißbänder verwendet werden, die speziell in Bezug auf die Erwärmungsfunktion ausgebildet sind. Je nach Ihrer Aufgabe (einerseits induktives Verschweißen, andererseits induktives Erwärmen) können die Schweißbänder auch mit unterschiedlichen Spannungen beaufschlagt werden. Die zum Erzielen der gewünschten Temperaturen erforderlichen Spannungswerte können dabei beispielsweise empirisch ermittelt werden.

Bei dem vorstehend beschriebenen Verfahren wurde davon ausgegangen, dass ein oder mehrere Schweißbänder zum induktiven Verschweißen und zum induktiven Erwärmen Verwendung finden. Diese Schweißbänder sind in Anpassung an die zu verschweißende Verbindungsbereiche der Muffe (Randbereiche) relativ schmal ausgebildet. Dies soll jedoch nicht ausschließen, dass bei dem erfindungsgemäßen Verfahren auch breitere Schweißbänder, letztendlich sogar ein einziges breites Schweißband Verwendung finden können, wobei bei diesen breiteren Schweißbändern entsprechende Leiterbereiche breitenmäßig begrenzte Maße besitzen. So kann beispielsweise ein einziges breites Band Verwendung finden, das etwa Muffenlänge besitzt und in das beispielsweise drei Leiterbereiche integriert sind, und zwar jeweils ein Bereich im Randbereich und ein Bereich in der Mitte. Hiervon dienen die beiden Leiterbereiche im Randbereich zum induktiven Verschweißen, während der Leiterbereich in der Mitte zum induktiven Erwärmen dient.

Erfindungsgemäß können daher entweder getrennte Bänder zum Verweißen und zum Erwärmen oder breitere Bänder Anwendung finden, in die entsprechende Leiterbereiche eingearbeitet sind, welche zum Verschweißen und zum Erwärmen dienen.

Bei einer speziellen Ausführungsform des erfindungsgemäßen Verfahrens wird ein Band um die unverschweißte Muffe gespannt, um eine radiale Ausdehnung des Muffenkörpers zu verhindern. Als Band wird hierbei vorzugsweise ein doppelseitiges Klettband verwendet. Das Band wird insbesondere an einer Stelle um die Muffe gespannt, an der mithilfe eines Metalleinsatzes und eines Schweißbandes ein induktiver Schweißvorgang durchgeführt wird.

Das Band wird zweckmäßigerweise um die unverschweißte Muffe gespannt, wenn diese ihre über den Hohlraum geschobene Lage zum induktiven Verschweißen eingenommen hat.

Die vorliegende Erfindung betrifft ferner eine Vorrichtung zum Verbinden von Kunststoffmantelrohren mit einer Induktionsschweißvorrichtung gemäß Patentanspruch 10. Vorzugsweise besitzt hierbei die Induktionsschweißvorrichtung zwei Schweißbänder zum induktiven Verschweißen der Randbereiche der Muffe mit den Außenrohren und mindestens ein weiteres Schweißband zum Erwärmen der Mediumrohre.

Die hier zum Einsatz kommenden Schweißbänder umfassen ein Trägerband, in das elektrische Leiterwindungen für eine Induktionsspule eingebettet sind. Die Schweißbänder sind beispielsweise über eine geeignete Schalteinheit an eine entsprechende Stromquelle angeschlossen. Die Ausbildung einer derartigen Induktionsschweißvorrichtung ist generell bekannt und muss an dieser Stelle nicht weiter erörtert werden.

Alternativ kann die erfindungsgemäß ausgebildete Vorrichtung auch so gestaltet sein, dass die Induktionsvorrichtung ein breites Schweißband aufweist, das mindestens einen Leiterbereich zum induktiven Verschweißen der Muffe und mindestens einen Leiterbereich zum induktiven Erwärmen der Mediumrohre besitzt. Bei dieser Ausführungsform sind daher mehrere jeweils eine Induktionsspule bildende Leiterbereiche in ein breites Trägerband mit Abstand voneinander integriert. Diese Vorrichtung ist in Anspruch 12 beschrieben.

Das Schweißband bildet eine Schleife, deren beide Enden von der Stromversorgungseinheit bzw. Schalteinheit ausgehen. Damit die Muffe eng vom Schweißband umschlungen wird, findet eine Lasche bzw. Klemme Verwendung, mit der die Schweißbandschleife um die Muffe festgezogen wird. Auf diese Weise können die gebildeten Schweißbandschleifen an unterschiedliche Durchmesser angepasst werden.

Die Erfindung wird nachfolgend anhand eines Ausführungsbeispieles in Verbindung mit der Zeichnung im Einzelnen erläutert. Es zeigen:
- Figur 1: einen Vertikalschnitt durch zwei Kunststoffmantelrohre während der Verbindungsphase; und
- Figur 2: eine schematische Draufsicht auf die Rohre der Figur 1.

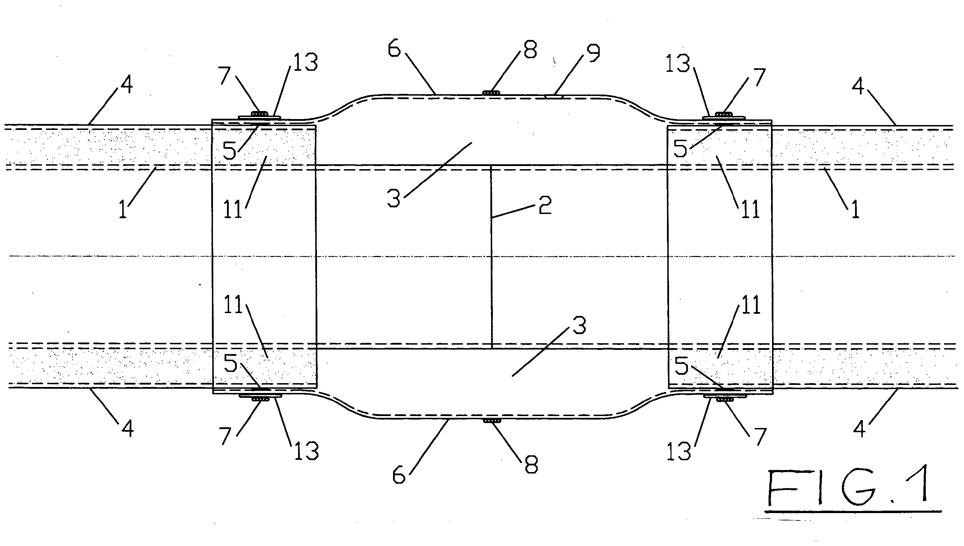

Die in Figur 1 im Vertikalschnitt dargestellten Kunststoffmantelrohre setzen sich jeweils aus einem Mediumrohr 1 aus Stahl, einem Außenrohr 4 aus thermoplastischem Kunststoff und einer zwischen beiden angeordneten Schaumisolierung 11, beispielsweise einem PU-Schaum, zusammen. Um eine Verbindung zwischen zwei Kunststoffmantelrohren herzustellen, sind die Rohre in ihrem Endbereich so ausgebildet, dass das jeweilige Mediumrohr 1 gegenüber der Schaumisolierung 11 und dem Außenrohr 4 axial vorspringt. Um die Rohre miteinander zu verbinden, werden als erstes die beiden Mediumrohre 1 miteinander verschweißt, wie durch die Schweißnaht 2 angedeutet. Danach wird eine vorher auf eines der Rohre aufgeschobene Muffe 6 aus thermoplastischem Material, beispielsweise PE, über den im Verbindungsbereich der Rohre ausgebildeten Hohlraum 3 geschoben. Es werden dann zwei doppelseitige Klettbänder 13 um die Muffe gespannt, und zwar an den Stellen, an denen der induktive Schweißvorgang stattfinden soll. Danach werden beide Randbereiche der Muffe 6 mit den beiden Außenrohren 4 induktiv verschweißt. Hierzu wird ein geeigneter ringförmiger Metalleinsatz 5, beispielsweise ein Streckgitter, an beiden Randbereichen zwischen Muffe 6 und Außenrohr 4 gelegt. Mithilfe von entsprechenden Schweißbändern 7, die um die Muffe 6 gegenüber den Metalleinsätzen 5 gelegt werden, werden Wirbelströme in den Metalleinsätzen 5 erzeugt, die zu einem Aufschmelzen von Muffe 6 und Außenrohr 4 und zu einer festen Verbindung zwischen beiden führen.

Nachdem die Muffe 6 in ihren beiden Randbereichen fest mit den beiden Außenrohren 4 verschweißt worden ist, wird mit Hilfe eines dritten Schweißbandes 8, das etwa mittig um die Muffe 6 gelegt worden ist, durch Induzierung von Wirbelströmen in den beiden Mediumrohren 1 eine Erwärmung derselben durchgeführt. Da in diesem Bereich unter der Muffe 6 keine Metalleinsätze vorhanden sind, wirkt sich die Induktion hier direkt auf die Mediumrohre 1 aus Stahl aus. Durch die auf diese Weise erzielte Erwärmung der Mediumrohre 1 wird erreicht, dass der mit der nachfolgenden Ausschäumung des Hohlraumes 3 erzielte PU-Schaum eine gute Qualität erhält, da insbesondere bei kalter Witterung das Entstehen von Kondenswasser durch Taupunktunterschreitung der Temperatur der Mediumrohre 1 verhindert wird.

Nach dem induktiven Erwärmen der Mediumrohre 1 oder während des Erwärmens werden in der Muffe 6 vorgesehene Öffnungen 9 geöffnet und wird der Hohlraum 3 über die Öffnungen 9 ausgeschäumt. Nach dem Beenden des Ausschäumvorganges werden die Öffnungen 9 wieder geschlossen. Die Schweißbänder 7, 8 können dann von der Rohrverbindung entfernt werden.

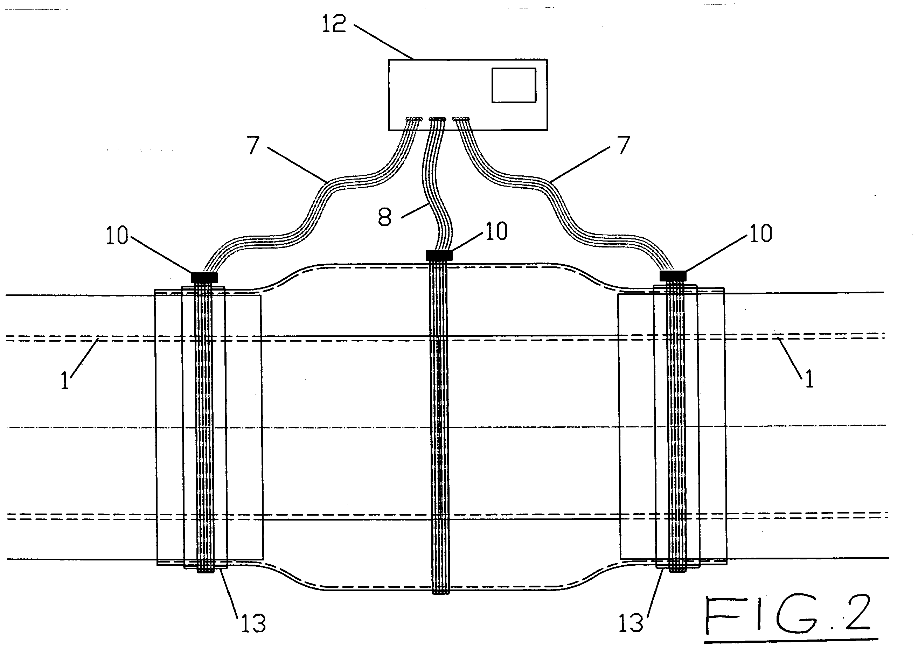

Figur 2 zeigt eine schematische Draufsicht auf den in Figur 1 dargestellten Verbindungsbereich. Bei der hier dargestellten Ausführungsform kommen drei Schweißbänder 7, 8 zum Einsatz, die von einer Induktionsschweißvorrichtung 12 (hier nur schematisch angedeutet) ausgehen. Die Schweißbänder 7, 8 bilden jeweils eine Schleife und werden mit Hilfe von Laschen 10 um die Muffe 6 festgezogen. Beide Endabschnitte eines Schweißbandes 7, 8 erstrecken sich somit von der Induktionsschweißvorrichtung 12 ausgehend bis zur Lasche 10, mit der sie zusammengeklemmt werden. Von dort aus umgreifen die Schweißbandabschnitte die Muffe 6 in Form einer fest anliegenden Schleife. Diese Schleife bildet eine Induktionsspule und sorgt beim entsprechenden Anlegen einer Spannung für die Erwärmung der Metalleinsätze 5 mit Hilfe der Schweißbänder 7 und der Mediumrohre 1 mit Hilfe des Schweißbandes 8.

## Patentansprüche

1. Verfahren zum Verbinden von Kunststoffmantelrohren, die ein metallisches Mediumrohr (1), eine dieses umgebende Schaumisolierung (11) und ein Außenrohr (4) aus thermoplastischem Kunststoff aufweisen, mit den folgenden Schritten:
Verschweißen der aneinanderstoßenden Mediumrohre (1);
Anordnen einer Muffe (6) aus thermoplastischem Kunststoff über einem über der Verbindungsstelle zwischen den Mediumrohren (1) gebildeten Hohlraum (3);
Anordnen eines Metalleinsatzes (5) im Verbindungsbereich zwischen Außenrohr (4) und Muffe (6) und induktives Verschweißen der Muffe (6) mit dem Außenrohr (4) mit Hilfe eines um die Muffe (6) gelegten Schweißbandes (7);
Ausschäumen des zwischen Muffe (6) und Mediumrohr (1) vorhandenen Hohlraumes (3);
**dadurch gekennzeichnet, dass** vor dem Ausschäumen oder während des Ausschäumens des Hohlraumes (3) nach dem induktiven Verschweißen von Muffe (6) und Außenrohr (4) dasselbe Schweißband (7), mit dem die Muffe (6) induktiv mit dem Außenrohr (4) verschweißt worden ist, oder vor dem Ausschäumen oder während des Ausschäumens des Hohlraumes (3) gleichzeitig mit oder nach dem induktiven Verschweißen von Muffe (6) und Außenrohr (4) mindestens ein weiteres Schweißband (8) in dem Bereich um die Muffe (6) gelegt wird, in dem kein Metalleinsatz (5) zwischen Muffe (6) und Außenrohr (4) gelegt worden ist, und dass dieses Schweißband (7, 8) mit einer entsprechenden Spannung beaufschlagt wird, um die Mediumrohre (1) induktiv zu erwärmen.

2. Verfahren nach Anspruch 1, **dadurch gekennzeichnet, dass** beide Randbereiche der Muffe (6) gleichzeitig mit Hilfe von zwei Schweißbändern (7) induktiv mit dem jeweiligen Außenrohr (4) verschweißt werden.

3. Verfahren nach Anspruch 1 oder 2, **dadurch gekennzeichnet, dass** mit mindestens drei Schweißbändern (7,8) gearbeitet wird, wobei zwei Schweißbänder (7) zum induktiven Verschweißen der Randbereiche der Muffe (6) und das dritte Schweißband (8) oder die weiteren Schweißbänder zum Erwärmen der Mediumrohre (1) verwendet werden.

4. Verfahren nach einem der vorangehenden Ansprüche,
**dadurch gekennzeichnet, dass** das weitere Schweißband (8) oder die weiteren Schweißbänder im mittleren Bereich der Muffe (6) um diese gelegt werden.

5. Verfahren nach einem der vorangehenden Ansprüche,
**dadurch gekennzeichnet, dass** das Schweißband (7) oder die Schweißbänder (7,8) in Form einer Schleife um die Muffe (6) gelegt werden und dass die Schleife mit Hilfe einer Lasche (10) eng an die Muffe (6) angepasst wird.

6. Verfahren nach einem der vorangehenden Ansprüche,
**dadurch gekennzeichnet, dass** ein oder mehrere breite Schweißbänder verwendet werden, die mehrere im Abstand voneinander angeordnete Leiterbereiche aufweisen, welche einerseits zum induktiven Verschweißen und andererseits zum induktiven Erwärmen dienen.

7. Verfahren nach einem der vorangehenden Ansprüche,
**dadurch gekennzeichnet, dass** ein Band um die unverschweißte Muffe gespannt wird, um eine radiale Ausdehnung des Muffenkörpers zu verhindern.

8. Verfahren nach Anspruch 7, **dadurch gekennzeichnet, dass** als Band ein doppelseitiges Klettband verwendet wird.

9. Verfahren nach Anspruch 7 oder 8, **dadurch gekennzeichnet, dass** das Band an einer Stelle um die Muffe gespannt wird, an der mithilfe eines Metalleinsatzes und eines Schweißbandes ein induktiver Schweißvorgang durchgeführt wird.

10. Vorrichtung zum Verbinden von Kunststoffmantelrohren, die ein metallisches Mediumrohr (1), eine dieses umgebende Schaumisolierung (11) und ein Außenrohr (4) aus thermoplastischem Kunststoff aufweisen, mit einer Induktionsschweißvorrichtung (12), die ein Schweißband (7) zum induktiven Verschweißen einer Muffe (6) mit dem Außenrohr (4) des Kunststoffmantelrohres aufweist und mindestens ein weiteres Schweißband (8) zum induktiven Erwärmen der Mediumrohre (1) umfasst, **dadurch gekennzeichnet, dass** beide Schweißbänder (7,8) je eine Schleife bilden, deren Enden von einer Stromversorgungseinheit bzw. Schalteinheit ausgehen,
und dass die Vorrichtung je eine Lasche (10) bzw. Klemme aufweist, mit der die Schweißbandschleifen um die Muffe (6) festziehbar sind.

11. Vorrichtung nach Anspruch 10, **dadurch gekennzeichnet, dass** die Induktionsschweißvorrichtung (12) zwei Schweißbänder (7) zum induktiven Verschweißen der Randbereiche der Muffe (6) mit den Außenrohren (4) und mindestens ein weiteres Schweißband (8) zum Erwärmen der Mediumrohre (1) besitzt.

12. Vorrichtung zum Verbinden von, die ein metallisches Mediumrohr, eine dieses umgebende Schaumisolierung und ein Außenrohr aus thermoplastischem Kunststoff aufweisen, mit einer Induktionsschweißvorrichtung, die ein Schweißband zum induktiven Verschweißen einer Muffe mit dem Außenrohr des Kunststoffmantelrohres aufweist, das als breites Schweißband ausgebildet ist, das mindestens einen Leiterbereich zum induktiven Verschweißen der Muffe und mindestens einen Leiterbereich zum induktiven Erwärmen der Mediumrohre besitzt,
**dadurch gekennzeichnet, dass** das Schweißband eine Schleife bildet, deren Enden von einer Stromversorgungseinheit bzw. Schalteinheit ausgehen,
und dass die Vorrichtung eine Lasche bzw. Klemme aufweist, mit der die Schweißbandschleife um die Muffe festziehbar ist.

## Claims

1. A method for connecting plastic jacket pipes having a metallic medium pipe (1), a foam isolation (11) surrounding the same and an outer pipe (4) of thermoplastic plastic, said method comprising the following steps:
Welding the adjoining medium pipes (1) with one another;
arranging a sleeve (6) of thermoplastic plastic above a space (3) formed over the connection place between the medium pipes (1);
arranging a metallic insert (5) in the connection range between outer pipe (4) and sleeve (6) and inductive welding of the sleeve (6) with the outer pipe (4) by means of a welding tape (7) laid arround the sleeve (6);
foaming the space (3) formed between sleeve (6) and medium pipe (1);
**characterized in that**, prior to the foaming or during the foaming of the space (3) after the inductive welding of sleeve (6) and outer pipe (4), the same welding tape (7) with which the sleeve (6) has been inductively welded with the outer pipe (4), or prior to the foaming or during the foaming of the space (3) simultaneously with or after the inductive welding of sleeve (6) and outer pipe (4), at least one additional welding tape (8) is laid arround the sleeve (6) **in that** range in which no metallic insert (5) has been laid between sleeve (6) and outer pipe (4), and that this welding tape (7, 8) is applied with a corresponding voltage in order to inductively heat the medium pipes (1).

2. The method according to claim 1, **characterized in that** the two edge portions of the sleeve (6) are simultaneously welded inductively with the respective outer pipe (4) by means of two welding tapes (7).

3. The method according to claim 1 or 2, **characterized in that** it is operated with at least three welding tapes (7, 8), wherein two welding tapes (7) are used for inductively welding the edge portions of the sleeve (6) and the third welding tape (8) or the additional welding tapes are used for heating the medium pipes (1.)

4. The method according to one of the preceding claims, **characterized in that** the additional welding tape (8) or the additional welding tapes are laid arround the sleeve (6) in the central portion thereof.

5. The method according to one of the preceding claims, **characterized in that** the welding tape (7) or the welding tapes (7, 8) are laid arround the sleeve (6) in the shape of a loop and that the loop is tightly adapted to the sleeve (6) by means of a bracket (10).

6. The medthod according to one of the preceding claims, **characterized in that** one or more wide welding tapes are used which have a plurality of spaced conductor portions which on the one side serve for inductively welding and on the other side serve for inductively heating.

7. The method according to one of the preceding claims, **characterized in that** a tape is stretched around the non-welded sleeve in order to prevent a radial extension of the sleeve body.

8. The method according to claim 7, **characterized in that** a double-sided velcro tape is used as tape.

9. The method according to claim 7 or 8, **characterized in that** the tape is stretched around the sleeve at a place at which an inductive welding process is carried out by means of a metallic insert and a welding tape.

10. A device for connecting plastic jacket pipes having a metallic medium pipe (1), a foam isolation (11) surrounding the same and an outer pipe (4) of thermoplastic plastic, said device comprising an induction welding device (12) including a welding tape (7) for inductively welding a sleeve (6) with the outer pipe (4) of the plastic jacket pipe and at least one additional welding tape (8) for inductively heating the medium pipes (1), **characterized in that** both welding tapes (7, 8) form a loop, respectively, the ends of which emanate from a current supply unit or switch unit, and that the device includes a bracket (10) or clamp, respectively, with which the welding tape loops are adapted to be tightened around the sleeve (6) .

11. The device according to claim 10, **characterized in that** the induction welding device (12) has two welding tapes (7) for inductively welding the edge portions of the sleeve (6) with the outer pipes (4) and at least one additional welding tape (8) for heating the medium pipes (1).

12. A device for connecting plastic jacket pipes having a metallic medium pipe, a foam isolation surrounding the same and an outer pipe of thermoplastic plastic, said device comprising an induction heating device including a welding tape for inductively welding a sleeve with the outer pipe of the plastic jacket pipe which is formed as wide welding tape having at least one conductor portion for inductively welding the sleeve and at least one conductor portion for inductively heating the medium pipes, **characterized in that** the welding tape forms a loop the ends of which emanate from a current supply unit or switch unit, and that the device has a bracket or clamp with which the welding tape loop is adapted to be tightened around the sleeve.

## Revendications

1. Procédé pour relier des tubes gainés en matière plastique, qui comportent un tube médian (1) métallique, une mousse isolante (11) entourant celui-ci et un tube externe (4) en une matière thermoplastique, avec les étapes suivantes :
soudage des tubes médians (1) mis bout à bout ;
agencement d'un manchon (6) en une matière thermoplastique sur un espace creux (3) formé au-dessus du point de liaison entre les tubes médians (1) ;
agencement d'un insert métallique (5) dans la zone de liaison entre tube externe (4) et manchon (6) et soudage par induction du manchon (6) avec le tube externe (4) à l'aide d'une bande de soudure (7) posée autour du manchon (6) ;
moussage de l'espace creux (3) existant entre manchon (6) et tube médian (1) ;
**caractérisé en ce que**, avant le moussage ou pendant le moussage de l'espace creux (3) après le soudage par induction du manchon (6) et du tube externe (4), la même bande de soudure (7) avec laquelle le manchon (6) a été soudé par induction avec le tube externe (4) ou, avant le moussage ou pendant le moussage de l'espace creux (3) en même temps que ou après le soudage par induction du manchon (6) et du tube externe (4), au moins une autre bande de soudure (8) est posée dans la zone autour du manchon (6) dans laquelle aucun insert métallique (5) n'a été posé entre manchon (6) et tube externe (4), et **en ce que** cette bande de soudure (7, 8) est soumise à une tension correspondante pour chauffer par induction les tubes médians (1).

2. Procédé selon la revendication 1, **caractérisé en ce que** deux zones marginales du manchon (6) sont soudées par induction en même temps à l'aide de deux bandes de soudure (7) avec le tube externe (4) respectif.

3. Procédé selon la revendication 1 ou 2, **caractérisé en ce qu'**on travaille avec au moins trois bandes de soudure (7, 8), deux bandes de soudure (7) étant utilisées pour le soudage par induction des zones marginales du manchon (6) et la troisième bande de soudure (8) ou les autres bandes de soudure étant utilisées pour le chauffage des tubes médians (1).

4. Procédé selon l'une quelconque des revendications précédentes, **caractérisé en ce que** l'autre bande de soudure (8) ou les autres bandes de soudure sont posées dans la zone centrale du manchon (6) autour de celui-ci.

5. Procédé selon l'une quelconque des revendications précédentes, **caractérisé en ce que** la bande de soudure (7) ou les bandes de soudure (7, 8) sont posées sous forme de boucle autour du manchon (6) et **en ce que** la boucle est étroitement adaptée au manchon (6) à l'aide d'un collier (10).

6. Procédé selon l'une quelconque des revendications précédentes, **caractérisé en ce qu'**une ou plusieurs bandes de soudure larges sont utilisées, lesquelles comportent plusieurs zones de conducteurs qui sont agencées à distance les unes des autres et qui servent d'une part au soudage par induction et d'autre part au chauffage par induction.

7. Procédé selon l'une quelconque des revendications précédentes, **caractérisé en ce qu'**une bande est tendue autour du manchon non soudé pour empêcher une dilatation radiale du corps de manchon.

8. Procédé selon la revendication 7, **caractérisé en ce qu'**une bande auto-agrippante à double face est utilisée comme bande.

9. Procédé selon la revendication 7 ou 8, **caractérisé en ce que** la bande est tendue autour du manchon à un endroit au niveau duquel une opération de soudage par induction est effectuée à l'aide d'un insert métallique et d'une bande de soudure.

10. Dispositif pour relier des tubes gainés en matière plastique, qui comportent un tube médian (1) métallique, une mousse isolante (11) entourant celui-ci et un tube externe (4) en une matière thermoplastique,
avec un dispositif de soudage par induction (12) qui comporte une bande de soudure (7) pour le soudage par induction d'un manchon (6) avec le tube externe (4) du tube gainé en matière plastique et comprend au moins une autre bande de soudure (8) pour le chauffage par induction des tubes médians (1),
**caractérisé en ce que** les deux bandes de soudure (7, 8) forment chacune une boucle dont les extrémités partent d'une unité d'alimentation en courant ou d'une boîte de commutation
et **en ce que** le dispositif comporte à chaque fois un collier (10) ou une pince avec laquelle les boucles de bande de soudure peuvent être tirées solidement autour du manchon (6).

11. Dispositif selon la revendication 10, **caractérisé en ce que** le dispositif de soudage par induction (12) a deux bandes de soudure (7) pour le soudage par induction des zones marginales du manchon (6) avec les tubes externes (4) et au moins une autre bande de soudure (8) pour le chauffage des tubes médians (1).

12. Dispositif pour relier des tubes gainés en matière plastique, qui comportent un tube médian métallique, une mousse isolante entourant celui-ci et un tube externe en une matière thermoplastique,
avec un dispositif de soudage par induction qui comporte une bande de soudure qui est destinée au soudage par induction d'un manchon avec le tube externe du tube gainé en matière plastique et qui est réalisée comme une bande de soudure large et qui a au moins une zone de conducteurs destinée au soudage par induction du manchon et au moins une zone de conducteurs destinée au chauffage par induction des tubes médians,
**caractérisé en ce que** la bande de soudure forme une boucle dont les extrémités partent d'une unité d'alimentation en courant ou d'une boîte de commutation
et **en ce que** le dispositif comporte un collier ou une pince avec laquelle la boucle de bande de soudure peut être tirée solidement autour du manchon.
